# EUROPEAN PATENT APPLICATION

(11) **EP 4 620 562 A1**
(43) Date of publication of application: **24.09.2025**
(21) Application number: 24164920.1
(22) Date of filing: 20.03.2024
(51) Int. Cl.: B01J 8/04, B01J 8/06, C01B 3/38

(54) **APPARATUS FOR PERFORMING AN ENDOTHERMIC REACTION OF A GAS FEED**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Shrivastava, Swatantra Kumar, 60439 Frankfurt am Main (DE); Rossi, Umberto, 60439 Frankfurt am Main (DE); Ulber, Dieter, 60439 Frankfurt am Main (DE)
(74) Representative: Air Liquide

(57) **Abstract**

Apparatus for the endothermic reaction of a gas feed, the apparatus comprising :
- a pre-heater (11) arranged for pre-heating the gas feed,
- at least one reactor tube (22),
- a furnace (21) arranged for the radiation and/or convection heating of said at least one reactor tube (22),
said at least one reactor tube (22) being at least partially filled with a catalyst material (30) configured for promoting the endothermic reaction, said at least one reactor tube (22) comprising :
- a tube inlet for said pre-heated gas feed,
- a main reaction tube portion (34) extending within said furnace (21) and a pre-reaction tube portion (33) extending outside of the furnace (21), said pre-reaction tube portion (33) being arranged between the tube inlet and the main reaction tube portion (34),
wherein part of the catalyst material (30) is extending within the pre-reaction tube portion (33).

## Description

The present invention relates to an apparatus for performing an endothermic reaction of a gas feed. The invention also relates to the use of the apparatus for such endothermic reaction.

Endothermic processes for the production of a synthesis gas from a hydrocarbon feedstock are known. The synthesis gas may serve among others for the production of ammonia or for the production of hydrogen. Endothermic processes of ammonia splitting into hydrogen and nitrogen are also known to recover hydrogen from ammonia. The recovered hydrogen has much better combustion properties than ammonia itself and is suitable for industrial use or as a transportation fuel. Typical reformer or cracker units comprise typically one or more fire-heated catalyst filled tubes.

It is known to have a pre-reaction step, for example a pre-reforming or pre-cracking step, of the gas feed followed by a main reaction step, for example a main reforming or main cracking step, in a main reactor. The pre-reaction step allows to reduce the heat duty in the main reactor for the heat input to the endothermic process. Prior art schemes usually use for the pre-reaction step a simple adiabatic pre-reactor separate from the main reactor. The endothermic heat of reaction is supplied via the gas feed that has been pre-heated.

Such schemes however require additional equipment, including the separate pre-reactor and the associated piping. They thus require more plot space and are more complex.

The invention relates to an apparatus for the endothermic reaction of a gas feed, the apparatus comprising :
- a pre-heater arranged for pre-heating the gas feed,
- at least one reactor tube,
- a furnace arranged for the radiation and/or convection heating of said at least one reactor tube,
said at least one reactor tube being at least partially filled with a catalyst material configured for promoting the endothermic reaction, said at least one reactor tube comprising :
- a tube inlet for said pre-heated gas feed,
- a main reaction tube portion extending within said furnace and a pre-reaction tube portion extending outside of the furnace, said pre-reaction tube portion being arranged between the tube inlet and the main reaction tube portion,
wherein part of the catalyst material is extending within the pre-reaction tube portion.

The pre-heated gas feed entering the pre-reaction tube portion is pre-reacted in an endothermic pre-reaction over the catalyst filling the pre-reaction tube portion. Consequently, a heat duty from the furnace to the main reaction tube portion can be reduced, thereby reducing a surplus heat from the furnace. The invention enables such pre-reaction and its advantageous without needing the additional equipment of the prior art, such additional equipment becoming optional.

The furnace is in particular arranged for the radiation and/or convection heating of said main reaction tube portion.

In one embodiment, the pre-reaction tube portion is arranged to partially react said pre-heated gas feed in a pre-reaction, thereby obtaining a partially reacted gas and the main reaction tube portion is arranged to further react the partially reacted gas in a main reaction.

In one embodiment, the pre-reaction tube portion length is between 30 and 80% of the total reactor tube length. In particular, the pre-reaction tube portion length is comprised between 4 and 10 meters and the total reactor tube length is comprised between 12 and 18 meters.

In one embodiment, the furnace comprises a radiant and convection chamber enclosing the main reaction tube portion for radiation and/or convection heat transfer to the main reaction tube portion. The pre-reaction tube portion is extending outside of the radiant and convection chamber. In particular, the radiant and convection chamber is a continuous chamber enclosing the main reaction tube portion. The radiant and convection chamber may be delimited by a refractory material.

In one embodiment, the furnace comprises an electrical heater arranged for the heating of said at least one reactor tube. In particular, said electrical heater is arranged within said radiant and convection chamber.

In one embodiment, the apparatus, in particular said at least one reactor tube, comprises at least one heat exchanger channel arranged for discharging from said at least one reactor tube a product gas produced by the endothermic reaction and for transferring heat from the product gas, in particular from the product gas being discharged, to at least part of the catalyst material. In particular, the at least one heat exchanger channel is arranged inside the at least one reactor tube. Preferably, the at least one heat exchanger channel is extending inside the at least one reactor tube through at least part of the catalyst material. Said at least one heat exchanger channel has for example a straight shape, a at least partially coiled shape or a at least partial helix shape.

In one embodiment, the at least one heat exchanger channel is arranged for discharging the product gas in countercurrent to the gas feed and product gas circulating within said catalyst material.

In one embodiment, said part of the catalyst material extending within the pre-reaction tube portion is an upstream portion of the catalyst material.

In one embodiment, the at least one heat exchanger channel is arranged for the transfer of heat from the product gas, in particular from the product gas being discharged, to at least part of the upstream portion of the catalyst material. In the latter embodiment, the apparatus enables the hot product gas discharged through the at least one heat exchanger channel to bring heat to the endothermic pre-reaction of the gas feed in the upstream portion of the catalyst material, thereby increasing a conversion rate of the pre-reaction. In particular, the at least one heat exchanger channel is extending inside the at least one reactor tube through at least part of said upstream portion of the catalyst material.

In one embodiment, the at least one heat exchanger channel is arranged for the transfer of heat from the product gas, in particular from the product gas being discharged, to only part of the upstream portion of the catalyst material. The extent of heating of the upstream portion of the catalyst material and thus the extent of the pre-reaction conversion may be adjusted this way. In particular, the at least one heat exchanger channel is extending inside the at least one reactor tube through only part of said upstream portion of the catalyst material.

In one embodiment, said part of the catalyst material extending within the pre-reaction tube portion is an upstream portion of the catalyst material and a downstream portion of the catalyst material is extending within the main reaction tube portion.

In one embodiment, the upstream portion of the catalyst material has a lower catalyst activation temperature than the downstream portion of the catalyst material. For example, the upstream portion comprises an active material different from an active catalyst material in the downstream portion and/or the upstream portion comprises a higher content of active catalyst material than the downstream portion. In particular, the upstream portion comprises an active material having a lower catalyst activation temperature compared to the active catalyst material in the downstream portion.

In one embodiment, said at least one heat exchanger channel is extending through the downstream portion of the catalyst material and through at least part of said upstream portion of the catalyst material. In particular, the at least one heat exchanger channel is extending through only part of the upstream portion of the catalyst material. In one embodiment, said at least one heat exchanger channel has a first shape in the downstream portion and a second shape in the upstream portion different from the first shape. For example, the at least one heat exchanger channel may have the shape of a straight tube in the downstream portion and may have the shape of a coil or helix in the upstream portion. Conversely, the at least one heat exchanger channel may have the shape of a coil or helix in the downstream portion and may have the shape of a straight tube in the upstream portion.

In one embodiment, the at least one heat exchanger channel is arranged for the transfer of heat from the product gas, in particular from the product gas being discharged, to the downstream portion of the catalyst material only. In this embodiment, the pre-heating of the gas feed is enough to perform said pre-reaction and the upstream portion of the catalyst material has a temperature profile similar to that of the catalyst material of an adiabatic reactor. In particular, the at least one heat exchanger channel is extending inside the at least one reactor tube through the downstream portion of the catalyst material only.

In one embodiment, the apparatus comprises at least one inlet header connected to said tube inlet, to supply the pre-heated gas feed to said at least one reactor tube.

In one embodiment, the apparatus comprises at least one outlet header connected to the at least one heat exchanger channel, to discharge from said at least one heat exchanger channel a product gas produced by the endothermic reaction.

In one embodiment, the apparatus comprises a fuel and combustion oxidant system arranged for the combustion of a fuel with an oxidant gas inside the furnace. In particular, the radiant and convection chamber is arranged to provide heat by radiation and/or convection heat transfer from said fuel and combustion oxidant system to the main reaction portion of said at least one reactor tube. The fuel and combustion oxidant system typically comprises at least one burner nozzle opening in said radiant and convection chamber.

In one embodiment, the apparatus comprises an equipment chamber separate from the furnace, said equipment chamber comprising at least part of the fuel and combustion oxidant system and/or comprising said at least one inlet header and/or said at least one outlet header. In particular, said equipment chamber is free from a refractory material.

In one embodiment, the furnace is delimited, in particular delimited from said equipment chamber, by a furnace wall and the pre-reaction tube portion is delimited from the main-reaction tube portion by said furnace wall. In particular, the fuel and combustion oxidant system is mounted on said furnace wall. The furnace wall is preferably lined with a refractory material on the furnace side. Said furnace wall is typically an upper wall of the furnace.

In one embodiment, the at least one inlet header and/or the at least one outlet header is mounted in said apparatus above said at least one reactor tube.

As compared to the state of the art reformers, the inlet and/or outlet header(s) can be installed near an extremity of said at least one reactor tube, away from the fuel and combustion oxidant system being installed near the limit between the pre-reaction tube portion and the main reaction tube portion, where the furnace starts. This is making the space integration and construction of each of these elements more convenient.

In one embodiment, the furnace is a top-fired furnace and the pre-reaction tube portion is an upper portion of said at least one reactor tube.

In one embodiment, the apparatus comprises several reactor tubes, each comprising a catalyst material configured for promoting the endothermic reaction. The furnace is arranged for the radiation and/or convection heating of each of said reaction tubes. Each of said several reactor tubes comprises a tube inlet for the pre-heated gas feed, a main reaction tube portion and a pre-reaction tube portion arranged between the tube inlet and the main reaction tube portion. Each of the pre-reaction tube portions is extending outside of the furnace and each of the main reaction tube portions is extending within said furnace. Part of each of the catalyst materials is extending within the pre-reaction tube portion.

In one embodiment, the apparatus, in particular each of said several reactor tubes, comprises several heat exchanger channels arranged for discharging from each of said several reactor tubes a product gas produced by the endothermic reaction and for transferring heat from the product gas to at least part of the catalyst material. In particular, each of said several heat exchanger channels is arranged inside each of said several reactor tubes. Preferably, each of said several heat exchanger channels is extending inside each of said several reactor tubes through at least part of the catalyst material. Said several heat exchanger channels have for example a coiled or helix shape.

The invention also relates to the use of the apparatus as described above for a cracking reaction of an ammonia feed as said gas feed. In particular, the pre-reaction tube portion is arranged to perform a pre-cracking reaction of the pre-heated ammonia feed, thereby obtaining a partly converted ammonia stream, and the main reaction tube portion is arranged to perform a further cracking reaction of the partly converted ammonia stream into a cracked gas comprising hydrogen, nitrogen and potentially unconverted ammonia.

The invention also relates to the use of the apparatus as described above for the conversion of a hydrocarbon feed into a hydrogen containing synthesis gas.

Other features, details and advantages of the invention will become clearer on reading the detailed description set out below, together with several embodiments provided purely as examples and by way of indication, with reference to the attached schematic drawing, in which :
Figure 1 shows an apparatus for performing endothermic processes according to the state of the art.
Figure 2 shows an apparatus of the invention according to one embodiment.
Figure 3 shows more details of the embodiment of figure 2.

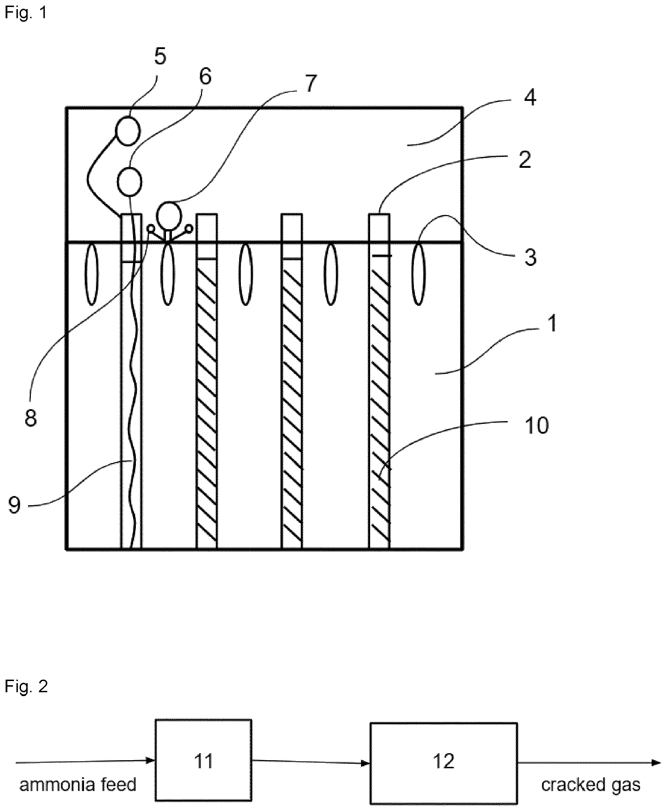

A reformer according to the state of the art is depicted in figure 1. The reformer comprises one or more catalyst filled reactor tubes 2 extending through a furnace 1. Each one of the tubes comprises an inlet (not represented) and a catalyst material 10 (represented as hatched on the drawings). The reformer is a top fired reformer with burners 3 being part of a fuel and combustion oxidant system mounted to the top of the furnace 1. The burners 3 are heating the furnace 1, driving the endothermic reforming reaction forward. A penthouse equipment chamber 4 is accommodating inlet and outlet headers 5, 6 to supply a hydrocarbon feed to the tubes 2 and discharge a synthesis gas produced by the endothermic reaction. A combustion air header 7 is accommodated in the same penthouse equipment chamber 4 and supplies combustion air as an oxidant gas to the burners for the combustion of a fuel. The fuel is supplied via fuel headers 8 to the burners 3. Only one inlet header 5, one outlet header 6, one combustion air header 7 and two fuel headers 8 are represented for the sake of simplicity. A nozzle of the burners 3 is directed to the interior of the furnace 1 to generate a flame inside the furnace 1. The inside of the furnace 1 constitutes a radiant and convection chamber wherein convection and radiation heat transfer occurs from the flames to the tubes 2 and in fine to the catalyst material in each of the tubes.

Each of the reactor tubes 2 comprise a tubular heat exchanger channel 9 extending through the catalyst material, for the discharge of synthesis gas from a lower portion of the tube to the outlet headers 6. The discharged hot synthesis gas brings further heat to the catalyst material, thereby reducing thermal losses through the synthesis gas. Only one heat exchanger channel 9 in one tube is represented schematically by a curved line for the sake of simplicity. The tubes may each comprise more than one heat exchanger channel. The heat exchanger channels typically have the shape of a coil.

Figure 2 is a schematic view of an ammonia cracker embodiment of the apparatus according to the invention. Here as well, only one inlet header 25, outlet header 26, combustion air header 27 and two fuel headers 28 are represented for the sake of simplicity. An ammonia feed is provided and pre-heated in a pre-heater 11. A superheated feed exits the pre-heater and enters a cracker unit 12.

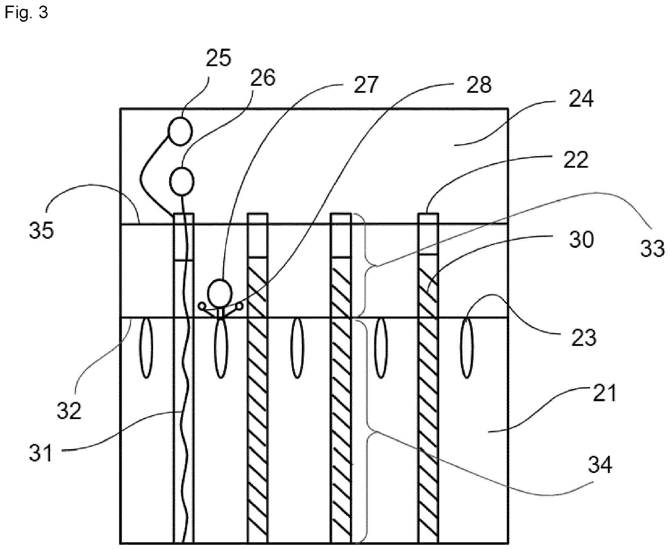

Details of the cracker unit are represented on figure 3. Apart from the use of the unit 12 to perform an ammonia cracking reaction and not the reforming of a hydrocarbon feed, differences with the reformer of figure 1 are explained thereafter.

The inlet of each of the reactor tubes is fluidically connected to the preheater 11. In this embodiment, the reactor tubes 22 are 14 meters long. A six meter portion 33 of the reactor tubes 22 is extending outside of the furnace 21, while an eight meter tube portion 34 is extending inside the furnace 21 and is heated directly by the furnace 21. The cracker unit comprises a penthouse equipment chamber 24. No refractory material is needed inside this penthouse equipment chamber 24, wherein no burner heating occurs. In general, the amount of refractory material needed for the construction is reduced as compared to prior art reformers. The furnace 21 is separated from the penthouse equipment chamber by a furnace wall 32 that is refractory lined on the side of the interior of the furnace 21. The reactor tubes 22 are extending through the furnace wall 32. The portion 33 of the tubes is delimited from the portion 43 by said furnace wall 32. In this embodiment, the combustion air headers 27 and the fuel headers 28, as well as the burners 23 and the rest of the fuel and combustion oxidant system, can be moved way below the inlet header 25 and the outlet header 26. This solves a major practical issue of space integration in the penthouse equipment chamber 24.

The tubes 22 are filled with a catalyst material 30 up to a level that is above the furnace wall 32. Therefore, a portion of the catalyst material 30 (having an upstream position with regard to the gas circulation in the tubes 22) is extending outside of the furnace 21 and is thus not heated directly by the furnace 21. As the pre-heated gas feed enters the tubes in their portion 33 outside of the furnace 21, some cracking will start by contact between the superheated ammonia feed and this upstream portion of the catalyst material 30. The portion 33 of the tubes 22 extending outside of the furnace 21 acts as a pre-cracker, wherein a partially cracked gas comprising ammonia, nitrogen and hydrogen is produced, while the portion 34 of the tubes inside the furnace acts as a main cracker in which the partially cracked gas is further cracked to obtain the cracked gas.

The upstream portion of the catalyst material 30 may differ from the downstream portion of the catalyst material to adapt to the different heating conditions compared to the downstream portion of the catalyst material 30 that is heated directly by the furnace, one may choose a active catalyst material different from the the active catalyst material of the downstream portion of the catalyst material. For example, ruthenium may be selected for the upstream catalyst material portion as having more catalytic activity at a lower temperature and nickel may be selected for the downstream catalyst material portion. Alternatively, nickel may be selected for both upstream and downstream portions, but the upstream portion may comprise a higher wt% of nickel compared to the downstream portion.

Here as well, each of the reactor tubes 22 comprise a tubular heat exchanger channel 31 for the discharge of the cracked gas and the heating of the catalyst material 30 by the hot cracked gas discharged. Only one heat exchanger channel 31 is represented in one tube for the sake of simplicity, but here as well, the tubes may each comprise more than one heat exchanger channel. In the embodiment of figure 3, the upper portion of the heat exchanger channel 31 is extending through the upstream portion of the catalyst material 30 and therefore heats this upstream portion. This increases the extent of the pre-cracking even outside of the tube length directly heated by the furnace 21. The pre-cracking conversion rate is enhanced as compared to an adiabatic cracker of the state of the art. The shape of the heat exchanger channel 31 may be optimized for each portion 33, 34 of the tubes 22. For example, a coiled or helix shape may be chosen for the portion 33 of the tubes extending outside the furnace 21, to increase the heat transfer from the hot discharged cracked gas to this portion 33 of the tube, while a straight tubular channel may be chosen for the portion 34 of the tubes extending inside the furnace 21.

The invention has been detailed in the embodiment of an ammonia cracker, but it should be noted that the invention also encompasses apparatuses and their use for other endothermic processes, such as hydrocarbon reforming and others.

## Claims

1. Apparatus for the endothermic reaction of a gas feed, the apparatus comprising :
- a pre-heater (11) arranged for pre-heating the gas feed,
- at least one reactor tube (22),
- a furnace (21) arranged for the radiation and/or convection heating of said at least one reactor tube (22),
said at least one reactor tube (22) being at least partially filled with a catalyst material (30) configured for promoting the endothermic reaction, said at least one reactor tube (22) comprising :
- a tube inlet for said pre-heated gas feed,
- a main reaction tube portion (34) extending within said furnace (21) and a pre-reaction tube portion (33) extending outside of the furnace (21), said pre-reaction tube portion (33) being arranged between the tube inlet and the main reaction tube portion (34),
wherein part of the catalyst material (30) is extending within the pre-reaction tube portion (33).

2. Apparatus according to the preceding claim, wherein a pre-reaction tube portion (33) length is between 30 and 80% of a total reactor tube (22) length.

3. Apparatus according to one of the preceding claims, comprising at least one heat exchanger channel (31) arranged for discharging from said at least one reactor tube (22) a product gas produced by the endothermic reaction and for transferring heat from the product gas to at least part of the catalyst material (30).

4. Apparatus according to the preceding claim, wherein said part of the catalyst material extending within the pre-reaction tube portion (33) is an upstream portion of the catalyst material (30) and the at least one heat exchanger channel (31) is arranged for the transfer of heat from the product gas to at least part of the upstream portion of the catalyst material.

5. Apparatus according to the preceding claim, wherein the at least one heat exchanger channel (31) is arranged for the transfer of heat from the product gas to only part of the upstream portion of the catalyst material (30).

6. Apparatus according to one of the preceding claims, comprising at least one inlet header (25) connected to said tube inlet, to supply the pre-heated gas feed to said at least one reactor tube (22) and/or comprising at least one outlet header (26) connected to the at least one heat exchanger channel (31), to discharge from said at least one heat exchanger channel (31) a product gas produced by the endothermic reaction, wherein the at least one inlet header (25) and/or the at least one outlet header (26) is mounted in said apparatus above said at least one reactor tube (22).

7. Apparatus according to one of the preceding claims, wherein said part of the catalyst material extending within the pre-reaction tube portion (33) is an upstream portion of the catalyst material (30) and a downstream portion of the catalyst material (30) is extending within the main reaction tube portion (34).

8. Apparatus according to the preceding claim, wherein the upstream portion of the catalyst material (30) has a lower catalyst activation temperature than the downstream portion of the catalyst material (30).

9. Apparatus according to one of claims 7 or 8 in combination with one of claims 3 to 5 or in combination with claim 6 taken in combination with one of claims 3 to 5, wherein said at least one heat exchanger channel (31) is extending through the downstream portion of the catalyst material (30) and through at least part of said upstream portion of the catalyst material (30), said at least one heat exchanger channel (31) having a first shape in the downstream portion and a second shape in the upstream portion different from the first shape.

10. Apparatus according to one of claims 7 or 8 in combination with one of claims 3 to 5 or in combination with claim 6 taken in combination with one of claims 3 to 5, wherein the at least one heat exchanger channel (31) is arranged for the transfer of heat from the product gas to the downstream portion of the catalyst material (30) only.

11. Apparatus according to one of the preceding claims, comprising a fuel and combustion oxidant system arranged for the combustion of a fuel with an oxidant gas inside the furnace (21), wherein the furnace (21) is delimited by a furnace wall (32), the pre-reaction tube portion (33) being delimited from the main-reaction tube portion (34) by said furnace wall (32) and the fuel and combustion oxidant system is mounted on said furnace wall (32).

12. Apparatus according to one of the preceding claims, wherein the furnace (21) is a top-fired furnace and the pre-reaction tube portion (33) is an upper portion of said at least one reactor tube (22).

13. Use of the apparatus according to one of the preceding claims for a cracking reaction of an ammonia feed.

14. Use of the apparatus according to one of claims 1 to 12 for the conversion of a hydrocarbon feed into a hydrogen containing synthesis gas.
